Europäisches Patentamt

European Patent Office

Office européen des brevets

(19)

(11) Veröffentlichungsnummer : **0 403 742 B1**

(12) **EUROPÄISCHE PATENTSCHRIFT**

(45) Veröffentlichungstag der Patentschrift :
**10.06.92 Patentblatt 92/24**

(51) Int. Cl.⁵ : **B01J 23/89,** B01D 53/36,
B01J 31/06

(21) Anmeldenummer : **90105969.1**

(22) Anmeldetag : **29.03.90**

(54) **Trägerkatalysator zur Oxidation von Kohlenmonoxid.**

(30) Priorität : **22.06.89 DE 3920427
24.03.90 DE 4009575**

(43) Veröffentlichungstag der Anmeldung :
**27.12.90 Patentblatt 90/52**

(45) Bekanntmachung des Hinweises auf die
Patenterteilung :
**10.06.92 Patentblatt 92/24**

(84) Benannte Vertragsstaaten :
**AT BE CH DE DK ES FR GB IT LI NL SE**

(56) Entgegenhaltungen :
**EP-A- 0 246 031
DE-A- 3 522 287
FR-A- 906 299
GB-A- 2 083 829
GB-A- 2 166 061**

(56) Entgegenhaltungen :
**CHEMISTRY LETTERS, 1987, Seiten 405-408,
JP; M. HARUTA et al.: "Novel gold catalyst for
the oxidation of carbon monoxide at atemperature far below 0 degrees Celsius"**

(73) Patentinhaber : **Solvay Catalysts GmbH
Hans-Böckler-Allee 20
W-3000 Hannover 1 (DE)**

(72) Erfinder : **Falke, Holger
Köllnbrinkweg 34
W-3005 Hemmingen 1 (DE)**
Erfinder : **Strauss, Günther
Alte Döhrener Strasse 43
W-3000 Hannover (DE)**

(74) Vertreter : **Lauer, Dieter, Dr.
c/o Solvay Deutschland GmbH, Postfach 220,
Hans-Böckler-Allee 20
W-3000 Hannover 1 (DE)**

**Beschreibung**

Die Erfindung betrifft einen Trägerkatalysator zur Oxidation von Kohlenmonoxid, Verfahren zu seiner Herstellung und ein Verfahren zur Oxidation von Kohlenmonoxid unter Anwendung des erfindungsgemäßen Trägerkatalysators.

Kohlenmonoxid ist eine gasförmige Verbindung, die in einer Vielzahl technisch durchgeführter Prozesse eingesetzt wird, beispielsweise bei der Herstellung von Methan aus Kohlenmonoxid und Wasserstoff. Kohlenmonoxid entsteht ferner als unerwünschter Schadstoff bei der unvollständigen Verbrennung und ist beispielsweise in Abgasen aus Verbrennungsmotoren enthalten. Schließlich kommt es auch natürlich vor, beispielsweise in Kohlebergwerken.

Aufgrund seiner Giftigkeit sollte Kohlenmonoxid in der Atemluft in möglichst geringen Mengen vorhanden sein. Die Verringerung des Gehalts an Kohlenmonoxid in Abluft aus technischen Anlagen oder in der Atemluft ist deshalb wünschenswert und, bei zu hohem Gehalt, notwendig. Seit vielen Jahren ist bekannt, daß die Oxidation von Kohlenmonoxid zu Kohlendioxid katalytisch beschleunigt werden kann. Katalysatoren, die bei möglichst tiefen Temperaturen, beispielsweise bei Umgebungstemperatur, aktiv sind und möglichst auch noch in Anwesenheit von Feuchtigkeit aktiv bleiben, sind besonders vorteilhaft, da sie sich beispielsweise ausgezeichnet für den Einsatz in unkompliziert aufgebauten Rettungsgeräten eignen. Sehr gut geeignet sind beispielsweise als Vollkatalysator ausgebildete Gemische von Gold und bestimmten Oxiden der Metalle Eisen, Kobalt und Nickel. Wie die Autoren H. Haruta, T. Kobayshi, H. Sano und N. Yamada in Chemistry Letters, Seiten 405 bis 408 (1987) schreiben, vermögen Gemische von Gold und den genannten Hetalloxiden, erhalten durch gemeinsames Fällen und vierstündiges Calcinieren bei Temperaturen von 400 °C, die Oxidation von Kohlenmonoxid bei Umgebungstemperatur zu katalysieren, und dies auch in Anwesenheit von Feuchtigkeit über längere Zeiträume.

Es ist zwar prinzipiell wünschenswert, katalytisch aktive Metalle, besonders natürlich wertvolle Edelmetalle, auf Träger aufzubringen, da dann die katalytische Aktivität effektiver ausgenutzt werden kann. In überwiegendem Maße verwendet man keramisches Trägermaterial, obwohl organisches Material ebenfalls anwendbar ist. Polymere organische Schaumstoffe als Trägermaterial weisen gegenüber keramischem Material noch zusätzliche Vorteile auf: beispielsweise sind sie vorteilhaft leicht und beispielsweise gegenüber Vibrationen oder mechanischen Stößen oder Schlägen in gewissen Grenzen unempfindlich.

Die vorgenannten Autoren haben jedoch gezeigt, daß Gold, auf einen keramischen Träger, nämlich γ-Aluminiumoxid aufgetragen, selbst nach dem Calcinieren bei 200 °C erst bei Temperaturen oberhalb von etwa 100 °C eine nennenswerte katalytische Aktivität bei der Oxidation von Kohlenmonoxid entwickelte. Abgesehen von der zur Herstellung von Trägerkatalysatoren notwendigen hohen Calcinierungstemperatur mußte der Fachmann auch aus der, zur Erreichung einer nennenswerten katalytischen Aktivität notwendigen hohen Betriebstemperatur des Trägerkatalysators folgern, daß organisches Trägermaterial für dieses katalytisch aktive Material und für diesen Anwendungszweck, nämlich die Oxidation von Kohlenmonoxid, von vornherein nicht in Frage kommen würde.

Aufgabe der Erfindung war es, neue Trägerkatalysatoren zur Oxidation von Kohlenmonoxid mit vorteilhaften Eigenschaften wie leichter Handhabbarkeit und mechanischer Stabilität zur Verfügung zu stellen.

Diese Aufgabe wird durch die erfindungsgemäßen Trägerkatalysatoren zur Oxidation von Kohlenmonoxid gelöst.

Der erfindungsgemäße Trägerkatalysator zur Oxidation von Kohlenmonoxid bei Temperaturen unterhalb von etwa 100 °C ist gekennzeichnet durch ein geschäumtes, im wesentlichen offenporiges organisches Polymer als Träger und eine katalytisch aktive Komponente, welche ein Gemisch von Gold und Eisen(III)oxid, ein Gemisch von Gold mit Trikobalttetraoxid, ein Gemisch von Gold und Nickel(II)oxid oder Gemische dieser Gemische enthält.

Im erfindungsgemäßen Trägerkatalysator kann die katalytisch aktive Komponente homogen im Polymer verteilt und/oder als Beschichtung auf dem Polymer vorliegen. In bevorzugten Trägerkatalysatoren liegt die katalytisch aktive Komponente als Beschichtung auf dem Polymer vor.

Prinzipiell sind alle bekannten, geschäumten, im wesentlichen offenporigen organischen Polymere als Träger im Rahmen der vorliegenden Erfindung verwendbar. Eine Vielzahl solcher Polymere mit unterschiedlichen Eigenschaften sind dem Fachmann bekannt.

Beispielsweise können geschäumte Polymere (Schaumstoffe) ganz unterschiedlicher Härte, von Weichschäumen bis hin zu Hartschäumen, verwendet werden.

Die Porengröße kann im Bereich von 0,1 bis 10 mm liegen, die Dichte des Schaumes zwischen 0,005 und 0,05 g/cm³.

Von entscheidender Wichtigkeit ist es, daß man als Träger ein im wesentlichen offenporiges organisches Polymer verwendet. Poren sind Hohlräume im jeweiligen Polymer. Hierbei stehen offene Poren mit dem umgebenden Medium in Verbindung, während geschlossene Poren in sich abgeschlossen sind und kein Medium eindringen lassen. Der Begriff "offenporig" steht im Rahmen der vorliegenden Erfindung für solche Poren, die über Öffnungen in der Porenwand mit anderen Poren und auf diese Weise schließlich mit dem umgebenden Medium, beispielsweise Luft, in Verbindung stehen.

Als von Gasen durchströmtes Katalysatorträgermaterial eignen sich geschäumte Polymere natürlich um so besser, je höher der Anteil an offenen Poren im Polymer ist. Zwar kann in der vorliegenden Erfindung prinzipiell auch ein Polymer als Katalysatorträger verwendet werden, welches neben offenen Poren auch einen größeren Anteil geschlossener Poren aufweist und somit gemischtporig ist. Die geringere wirksame Oberfläche und der höhere Druckabfall lassen die Verwendung eines solchen Polymers jedoch als wenig zweckmäßig erscheinen. Im Rahmen der vorliegenden Erfindung kommen deshalb im wesentlichen offenporige Polymere als Träger zur Anwendung. Der Begriff "im wesentlichen offenporig" bedeutet in diesem Zusammenhang, daß ein wesentlicher Anteil, beispielsweise etwa 90 % und mehr, vorzugsweise 95 bis etwa 100 %, der im Polymer enthaltenen Poren offenporig sein soll.

Es ist bekannt, daß geschäumte Polymere je nach Art ihrer Herstellung geschlossenporig, gemischtporig oder offenporig anfallen (nach einer anderen Bezeichnungsweise nennt man diese Schäume auch geschlossenzellig, gemischtzellig und offenzellig). Es ist auch bekannt, daß man gegebenenfalls vorhandene geschlossene Poren durch chemische oder physikalische Methoden in offene Poren umwandeln kann. Dieser Vorgang wird als Retikulieren bezeichnet. Im Rahmen der vorliegenden Erfindung können unmittelbar bei der Herstellung im wesentlichen offenporig anfallende, im wesentlichen offenporige geschäumte organische Polymere verwendet werden. Gleichermaßen können im wesentlichen offenporige, geschäumte Polymere verwendet werden, die bei der Herstellung zunächst geschlossenporig oder gemischtporig anfallen und dann retikuliert werden.

Eine Vielzahl geschäumter, im wesentlichen offenporiger organischer Polymere aus verschiedensten chemischen Materialien sind dem Fachmann bekannt und können in den erfindungsgemäßen Trägerkatalysatoren als Träger zur Anwendung kommen. Gut geeignet sind beispielsweise Polymere auf Basis von Polystyrol, Styrolcopolymeren, Polyvinylchlorid oder Polyurethan. Sehr gut geeignet sind geschäumte im wesentlichen offenporige organische Polymere auf Polyurethanbasis. Diese sind in Form weicher bis hin zu harten Schaumstoffen erhältlich und können in bekannter Weise aus Isocyanaten und Wasser, Carbonsäuren, Diolen, Glykoläthern, Polyolen sowie gewünschtenfalls in Anwesenheit von Treibgasen, Emulgatoren und anderen Hilfsstoffen hergestellt werden. Als Beispiel seien die offenporigen Polyurethanschäume der Firma Illbruck, Leverkusen, genannt, beispielsweise die Schaumstoffe mit der Bezeichnung SPPI 10, 15, 20, 30, 45, 60, 80 oder 100. Diese Schaumstoffe weisen 10, 15, 20, 30, 45, 60, 80 oder 100 Poren per Inch 2,54 cm auf.

Der Gehalt an katalytisch aktiver Komponente kann im erfindungsgemäßen Trägerkatalysator in weiten Bereichen schwanken. Zweckmäßig liegt sie in einer Menge von 5 Gew.-% bis 80 Gew.-%, vorzugsweise 10 Gew.-% bis 50 Gew.-%, bezogen auf das Gesamtgewicht des Trägerkatalysators, vor. Ist sie in geringeren als den angebenen Mengen vorhanden, sinkt der Umsatzgrad der Oxidation von Kohlenmonoxid auf ein zu geringes Maß ab, wird sie in größeren als den angebenen Mengen eingesetzt, wird der Edelmetallgehalt möglicherweise nicht effektiv ausgenutzt.

Sofern das Gold im Gemisch mit Eisen(III)oxid vorliegt, liegt das Atomverhältnis zwischen und Gold und Eisen im Bereich von etwa 1 : 999 bis etwa 1 : 4, vorzugsweise zwischen etwa 1 : 99 bis etwa 1 : 9, besonders bevorzugt zwischen etwa 1 : 49 bis 1 : 14.

Sofern das Gold im Gemisch mit Trikobalttetraoxid vorliegt, liegt das Atomverhältnis zwischen Gold und Kobalt in dem auch für Eisen angegebenen Bereich.

Sofern das Gold im Gemisch mit Nickel(II)oxid vorliegt, liegt das Atomverhältnis zwischen Gold und Nickel im Bereich von 1 : 49 bis 1 : 8.

In einer bevorzugten Ausführungsform enthält die katalytisch aktive Komponente ein Gemisch von Gold und Eisen(III)oxid. In einer besonders bevorzugten Ausführungsform besteht die katalytisch aktive Komponente aus einem solchen Gemisch.

Die katalytisch aktive Komponente sollte möglichst in Form kleiner Partikel auf dem Träger vorliegen oder im Träger enthalten sein, vorteilhafterweise in Partikeln kleiner als 2 mm. Gut geeignet sind auch Trägerkatalysatoren, die mit einer katalytisch aktiven Komponente mit einer Partikelgröße zwischen 10 μm und 200 μm beschichtet sind.

Der erfindungsgemäße Trägerkatalysator kann in ganz unterschiedlicher Form ausgebildet sein. Beispielsweise kann er monolithartig in Würfelform, in Blockform, in Plattenform oder in Kugelform vorliegen. Das Raumvolumen des Trägerkatalysators kann im Bereich weniger Kubikzentimeter, beispielsweise 5 cm³, bis hin zu mehreren Litern, beispielsweise 10 Litern und mehr, betragen.

Im folgenden werden Verfahren zur Herstellung der erfindungsgemäßen Trägerkatalysatoren beschrieben.

Das erfindungsgemäße Verfahren zur Herstellung von Trägerkatalysatoren zur Oxidation von Kohlenmonoxid, umfassend eine katalytisch aktive Komponente, welche ein Gemisch von Gold und Eisen(III)oxid, ein Gemisch von Gold und Trikobalttetraoxid, ein Gemisch von Gold und Nickel(II)oxid oder Gemische dieser Gemische enthalten, sowie ein geschäumtes, im wesentlichen offenporiges organisches Polymer als Träger, ist dadurch gekennzeichnet, daß man

A) eine katalytisch aktive Komponente herstellt, umfassend das Erzeugen eines Gemisches einer Goldverbindung und einer Eisenverbindung, eines Gemisches einer Goldverbindung und einer Kobalt-Verbindung, eines Gemisches einer Goldverbindung und einer Nickel-Verbindung, Calcinieren des Gemisches bei Temperaturen oberhalb von 250 °C und Zerkleinern des erhaltenen Feststoffes auf Partikelgrößen unterhalb von 2 mm,

und

B1) zur Herstellung von Trägerkatalysatoren mit homogen im Träger verteilter katalytisch aktiver Komponente ein organisches Präpolymer mit der in Stufe A) erhaltenen katalytisch aktiven Komponente vermischt, das erhaltene Gemisch unter Verschäumen polymerisiert und gewünschtenfalls vorhandene geschlossene Zellen retikuliert

oder

B2) zur Herstellung beschichteter Trägerkatalysatoren ein geschäumtes, im wesentlichen offenporiges organisches Polymer verwendet, das Polymer mit der in Stufe A) erhaltenen katalytisch aktiven Komponente beschichtet.

Zur Herstellung der katalytisch aktiven Komponente in Stufe A) wird somit in einem ersten Schritt ein Gemisch einer Goldverbindung und einer Eisen-, Kobalt- oder Nickelverbindung erzeugt. Der Einfachheit halber wird im folgenden nur noch das Erzeugen eines Gemisches einer Goldverbindung und einer Eisenverbindung detailliert beschrieben. In analoger Weise lassen sich auch Gemische mit Kobalt- bzw. Nickelverbindungen herstellen.

Das gewünschte Gemisch einer Goldverbindung und einer Eisenverbindung kann nach verschiedenen Varianten erhalten werden.

Gemäß einer Variante stellt man eine Lösung her, die eine gelöste Goldverbindung und eine gelöste Eisenverbindung enthält. Nach dem Entfernen des Lösungsmittels, z.B. durch Abdampfen, erhält man das gewünschte Gemisch einer Goldverbindung und einer Eisenverbindung.

Gemäß einer anderen Variante verwendet man als Eisenverbindung Eisenoxid, z.B. Hämatit, und tränkt dieses Material mit der Lösung einer Goldverbindung. Das beim Tränken erhaltene Gemisch kann gewünschtenfalls getrocknet werden.

Gemäß einer bevorzugten Variante wird zunächst eine Lösung hergestellt, welche eine gelöste Goldverbindung und eine gelöste Eisenverbindung enthält. Durch Zugabe eines für beide Metallsorten wirksamen Fällmittels, beispielsweise einer Base, erzeugt man ein gemeinsam gefälltes Gemisch einer Goldverbindung und einer Eisenverbindung, beispielsweise ein gemeinsam gefälltes Gemisch von Goldhydroxid und Eisenoxidhydrat. Dieses Gemisch kann dann gewünschtenfalls getrocknet werden.

Als Lösungsmittel sind in den vorstehend beschriebenen Varianten organische Lösungsmittel, beispielsweise Alkohole, Nitrile wie Acetonitril oder andere Lösungsmittel wie Dimethylformamid anwendbar, gegebenenfalls im Gemisch mit Wasser. Bevorzugtes Lösungsmittel ist reines Wasser.

Als Goldverbindung können beispielsweise Salze verwendet werden, die Goldkationen enthalten, beispielsweise Goldhalogenide, insbesondere Goldtrichlorid. Verwendet werden können auch Salze mit komplexierten Goldkationen, wobei als Komplexbildner beispielsweise Ammoniak oder mit Niedrigalkylgruppen substituierte primäre, sekundäre oder tertiäre Amine in Frage kommen. Beispielsweise ist Gold-(Diäthylamin)-Trichlorid verwendbar.

Es können beispielsweise auch solche Goldverbindungen verwendet werden, die das Gold in Form komplexer Anionen enthalten. Verwendbar sind beispielsweise die gewünschtenfalls hydratisierten Goldsäuren, wie Halogenogoldsäuren, insbesondere Tetrachlorogoldsäure, ferner Cyanogoldsäure oder Nitratogoldsäure sowie die entsprechenden Alkalimetallsalze, z.B. das Kaliumsalz.

Als lösliche Goldverbindung verwendet man im Verfahren der vorliegenden Erfindung bevorzugt Tetrachlorogoldsäure-Tetrahydrat.

Die Konzentration der Lösung der Goldverbindung ist nicht kritisch. Sie beträgt vorteilhafterweise zwischen etwa 10 g/l und 100 g/l Lösungsmittel.

Zur Herstellung von Eisensalzlösungen verwendet man vorteilhaft Lösungen von Salzen des dreiwertigen Eisens. Bei Verwendung von Salzen des zweiwertigen Eisens schließt sich noch eine oxidative Behandlung zur Überführung in dreiwertiges Eisen an. Dies kann beispielsweise beim noch zu beschreibenden Calcinieren durch anwesenden Luftsauerstoff geschehen. Beispielsweise kann man Eisensalze mit den Anionen organischer Säuren, z.B. Ameisensäure, bevorzugt aber Salze mit den Anionen anorganischer Säuren einsetzen. Geeignet sind beispielsweise Eisenhalogenide und -pseudohalogenide, insbesondere Eisenchlorid. Sehr gut geeignet ist Eisennitrat. Die Konzentration des Eisensalzes beträgt vorteilhafterweise zwischen etwa 10 und 100 g/l Lösungsmittel.

Gemäß der bevorzugten Ausführungsform stellt man zunächst eine Lösung her, vorzugsweise eine wäßrige Lösung, welche eine gelöste Goldverbindung, vorzugsweise Tetrachlorogoldsäure, und eine gelöste Eisenverbindung, vorzugsweise Eisennitrat enthält, und kontaktiert die erhaltene Lösung mit einem Fällmittel, beispielsweise mit einer Base. Als Base kommen beispielsweise basische Alkalimetall- oder Ammoniumverbindungen, z.B. Ammoniakwasser, Natron- oder Kalilauge, Natrium-, Kalium- oder Ammoniumcarbonat oder -hydrogencarbonat und Frage. Besonders geeignet sind Ammoniumverbindungen, insbesondere Ammoniumcarbonat. Die Base verwendet man vorteilhafterweise in Form einer Lösung, insbesondere in Form einer wäßrigen Lösung. Die Konzentration ist nicht kritisch und liegt vorteilhafterweise zwischen 10 g/l und 100 g/l.

In einer bevorzugten Ausführungsform setzt man bei der Erzeugung des Gemisches von Goldverbindung und Eisenverbindung solche Mengen ein, welche einem Atomverhältnis von Gold zu Eisen von 1 : 999 bis 1 : 4, vorzugsweise von 1 : 99 bis 1 : 9, insbesondere von 1 : 49 bis 1 : 14, entsprechen.

Die nach einer der vorstehend beschriebenen Vorgehensweisen erhältlichen Gemische von Goldverbindung und Eisen-, Kobalt- oder Nickelverbindung können bei Temperaturen zwischen 50 und 150 °C getrocknet werden. Das gewünschtenfalls getrocknete Gemisch wird zur Umwandlung in die katalytisch aktive Komponente bei Temperaturen von mindestens 200 °C kalciniert. Dies kann in einer Atmosphäre aus inerten Gasen wie beispielsweise Stickstoff geschehen. Vorteilhaft erfolgt das Calcinieren in Luft. Es erfolgt über eine Zeitdauer von mehreren Stunden, beispielsweise von 1 bis zu 24 Stunden. Erst durch dieses Calcinieren wird das Gemisch aktiviert und ist dann als katalytisch aktive Komponente für die Oxidation von Kohlenmonoxid bei Temperaturen unterhalb von etwa 100 °C verwendbar. Die Calcinierungstemperatur liegt vorzugsweise zwischen etwa 250 °C und etwa 500 °C.

Vorteilhafterweise sollte die katalytisch aktive Komponente in Form möglichst kleiner Partikelchen auf das Trägermaterial aufgebracht werden. Besonders geeignet sind Partikelgrößen unterhalb von 2 mm. Sofern die katalytisch aktive Komponente nach dem Calcinieren nicht in Form entsprechend kleiner Partikelchen vorliegt, wird sie durch an sich bekannte Verfahren auf Partikelgrößen unterhalb von etwa 2 mm zerkleinert, gewünschtenfalls auf unterhalb 200 µm, insbesondere zwischen etwa 10 µm und 200 µm, beispielsweise durch Kugelmühlen oder Schlagmühlen.

Die katalytisch aktive Komponente aus Stufe A) wird in Stufe B1) oder B2) zu den erfindungsgemäßen Trägerkatalysatoren weiterverarbeitet.

Hierbei sind also zwei Varianten möglich.

In der Variante B1) wird die in Stufe A) erhaltene katalytisch aktive Komponente mit einem Präpolymer sowie gewünschtenfalls bei der Herstellung von geschäumten, organischen Polymeren üblichen Hilfsstoffen, z.B. Schaumstabilisatoren, Tensiden, Treibgasen, Reaktionsbeschleunigern etc. vermischt, das erhaltene Gemisch in bekannter Weise unter Verschäumen polymerisiert und gewünschtenfalls vorhandene geschlossene Zellen retikuliert. Bei dieser Vorgehensweise erhält man einen Trägerkatalysator, in welchem die katalytisch aktive Komponente im Trägermaterial gleichmäßig verteilt vorliegt.

Das bevorzugte Herstellungsverfahren sieht die Kombination der Stufen A) und B2) vor. Nach Variante B2) verwendet man ein geschäumtes, im wesentlichen offenporiges organisches Polymer und beschichtet das Polymer mit der katalytisch aktiven Komponente aus Stufe A). Hierbei werden Trägerkatalysatoren erhalten, die ein geschäumtes, im wesentlichen offenporiges organisches Polymer, beschichtet mit der katalytisch aktiven Komponente umfassen. Diese Verfahrensvariante führt zu besonders vorteilhaften Trägerkatalysatoren.

Prinzipiell kann man im Verfahren der vorliegenden Erfindung zur Herstellung von erfindungsgemäßen Trägerkatalysatoren alle bekannten, geschäumten, im wesentlichen offenporigen organischen Polymere, wie bereits vorstehend beschrieben, als Träger in Stufe B2) verwenden. Vorzugsweise liegt die Porengröße im Bereich von 0,1 bis 10 mm, die Dichte des Schaumes zwischen 0,005 und 0,05 g/cm³.

Besonders bevorzugt verwendet man im Verfahren der vorliegenden Erfindung Polymere auf Basis von Polystyrol, Styrolcopolymer, Polyvinylchlorid oder Polyurethan, insbesondere Polymere auf Polyurethanbasis, beispielsweise die schon erwähnten SPPI-Typen der Firma Illbruck, Leverkusen.

Zweckmäßiger Weise bringt man die katalytisch aktive Komponente in Stufe B1) in einer solchen Menge ein bzw. in Stufe B2) in einer solchen Menge auf, daß der Gehalt an katalytisch aktiver Komponente in einer Menge von 5 Gew.-% bis 80 Gew.-%, vorzugsweise 10 Gew.-% bis 50 Gew.-%, be zogen auf das Gesamtgewicht des gebrauchsfertigen Trägerkatalysators, vorliegt.

Neben der Möglichkeit, als katalytisch aktive Komponente Gemische von Gold und Eisen(III)oxid, von Gold und Trikobalttetroxid oder von Gold und Nickel(II)oxid auf den Träger aufzubringen oder in den Träger einzubringen, kann man auch Gemische zweier oder aller drei Gemische auf den Träger aufbringen oder in den Träger einbringen.

Beispielsweise kann man auf den Träger nacheinander ein Gemisch von Gold und Eisen(III)oxid und danach ein Gemisch von Gold und Nickel(II)oxid aufbringen.

In einer besonders bevorzugten Ausführungsform beschichtet man den Träger mit einer katalytisch aktiven Komponente, die ein Gemisch von Gold und Eisen(III)oxid enthält und insbesondere aus Gold und Eisen(III)oxid besteht.

Das als Trägermaterial verwendete geschäumte Polymer kann in ganz unterschiedlicher Form ausgebildet sein, beispielsweise kann es in beliebiger Größe als Körper mit wenigen Kubikzentimetern Raumvolumen bis hin zu mehreren, beispielsweise 10 und mehr Litern Raumvolumen in Form von monolithartigen Würfeln, Blöcken, Platten oder in Kugelform verwendet werden.

Das als Trägermaterial vorgesehene Polymer und/oder die aufzubringende katalytisch aktive Komponente wird zweckmäßigerweise einer Vorbehandlung unterworfen, die die Haftung der Partikel der aktiven Komponente auf der Polymeroberfläche verbessert. Beispielsweise kann man die Partikel auf erhöhte Temperatur bringen, beispielsweise auf etwa 150 bis 250 °C, und dann mit dem Trägermaterial kontaktieren, z.B. in einer Wirbelschichtanlage durch das Trägermaterial durchrieseln lassen. Infolge der hohen Temperatur der Partikel erweicht die Polymeroberfläche, und die katalytisch aktive Komponente wird als Beschichtung auf der Polymeroberfläche fixiert. Beispielsweise kann eine solche Vorbehandlung auch die Oberfläche des Polymers mit einem die Anlösung der Oberfläche bewirkenden Lösungsmittel, die Vorbehandlung mit einem (möglichst dünn) aufzubringenden Klebemittel, mit einem die Oberfläche des Polymers ätzenden Gas und/oder eine thermische Behandlung des Polymers umfassen.

Zusätzlich oder alternativ kann man die katalytisch aktive Komponente im Träger durch Umhüllung des Trägers mit geeigneten Mitteln, beispielsweise Gaze, fixieren.

Die Beschichtung des gewünschtenfalls vorbehandelten Trägermaterials mit der feinpulverisierten katalytisch aktiven Komponente kann beispielsweise in einer Wirbelschichtanlage geschehen.

Überraschenderweise erwiesen sich die erfindungsgemäßen Trägerkatalysatoren als verwendbar für die Oxidation von Kohlenmonoxid bei Temperaturen unterhalb von etwa 100 °C. Sie sind katalytisch aktiv auch bei der Anwesenheit von Feuchtigkeit (Wasserdampf). Das zu oxidierende Kohlenmonoxid kann in verhältnismäßig geringer Konzentration, beispielsweise in einer Konzentration von etwa 5 ppm bis 100 ppm, aber auch in höheren Konzentrationen, bis hin zu 1 Vol-% und mehr, in den zu reinigenden Gasgemischen enthalten sein. Die erfindungsgemäßen Trägerkatalysatoren sind besonders gut geeignet zur Oxidation von Kohlenmonoxid in gegebenenfalls Feuchtigkeit enthaltender Luft bei Temperaturen unterhalb von etwa 100 °C. Ihren Anwendungsbereich finden sie beispielsweise in der Klimatechnik und sogenannten Selbstrettern, wie sie beispielsweise in Bergwerken, in industriellen Betrieben und bei Rettungsdiensten verwendet werden, ferner bei der Aufbereitung industrieller Abluft.

Ein weiterer Gegenstand der Erfindung ist ein Verfahren zur Oxidation von Kohlenmonoxid bei Temperaturen unterhalb von etwa 100 °C, in welchem man ein Kohlenmonoxid und Sauerstoff enthaltendes Gas über einen der vorstehend beschriebenen Trägerkatalysatoren leitet. Der Sauerstoffgehalt sollte zweckmäßigerweise mindestens der zur völligen Oxidation von Kohlenmonoxid notwendigen Menge entsprechen.

Bevorzugt ist ein Verfahren, in welchem man Kohlenmonoxid enthaltende Luft über einen nach einem der vorstehend beschriebenen Herstellverfahren erhältlichen Trägerkatalysator leitet. Hierbei kann es sich um trockene Luft oder um feuchte, wasserhaltige Luft handeln, welche Wasserdampf in kleinen Mengen bis hin zur Sättigung, beispielsweise zwischen etwa 0,1 % und 80 % relativer Feuchte enthält.

Bevorzugt führt man das Verfahren zur Oxidation von Kohlenmonoxid bei Temperaturen unterhalb von etwa 50 °C, insbesondere bei Umgebungstemperatur, d.h. zwischen etwa 15 und etwa 25 °C durch.

Eine Quelle für die Luftverunreinigung mit Kohlenmonoxid stellen die Abgase von Verbrennungsmotoren dar. Diese mit CO verunreinigte Luft ist gleichzeitig aber die Atemluft für Verkehrsteilnehmer, beispielsweise Autofahrer und -beifahrer, Lastwagenfahrer und -beifahrer, Autobusfahrer und -Passagiere. Ein besonderes Anwendungsgebiet des erfindungsgemäßen Trägerkatalysators liegt in der Reinigung der Luft, die den Fahrzeuginnenräumen von Autos, Nutzfahrzeugen und Autobussen zugeführt wird. Die erfindungsgemäßen Trägerkatalysatoren erfüllen diese Aufgabe sehr gut, da sie ohne Energiebedarf bei tiefer Temperatur den Kohlenmonoxidgehalt aus Luft wirksam entfernen können. Sie sind lange Zeit aktiv und werden in ihrer Aktivität trotz naturgemäß wechselndem Feuchtigkeitsgehalt der zu reinigenden Luft nicht oder kaum beeinflußt.

Die erfindungsgemäßen Trägerkatalysatoren weisen den überraschenden Vorteil auf, daß sie bei tiefen Temperaturen auch in Anwesenheit von Feuchtigkeit aktiv sind, daß sie eine ökonomische Ausnutzung des verwendeten Edelmetalls Gold gestatten, daß sie sehr leicht sind, daß sie sehr gut handhabbar sind, beispielsweise an Ort und Stelle auf gewünschte Dimension zurechtgeschnitten werden können, daß sie gegenüber Schlag oder Stoß stabil und auf sehr einfache Art herzustellen sind. Die folgenden Beispiele sollen die Erfindung weiter erläutern, ohne sie in ihrem Umfang einzuschränken.

Beispiel 1:

1.1. Herstellung der katalytisch aktiven Komponente (Stufe A des Herstellungsverfahrens)

Durch Auflösen von Tetrachlorogoldsäure und Eisen(III)nitrat in destilliertem Wasser wurde eine wässrige Lösung hergestellt, welche 7 g/l Gold sowie 38 g/l Eisen enthielt. 14 ml dieser wäßrigen Lösung wurden mit 10 ml einer wässrigen Lösung von Ammoniumcarbonat, Gehalt: 290 g/l, unter Rühren versetzt. Der ausgefallene Feststoff wurde durch Filtrieren abgetrennt, während einer Zeitdauer von 24 h bei etwa 25 °C getrocknet und anschließend 5 h bei einer Temperatur von etwa 400 °C calciniert. Der calcinierte Feststoff wurde dann auf eine Teilchengröße von 50 bis 100 μm in einer Schlagmühle zerkleinert. Ausbeute: etwa 750 mg.

1.2. Beschichten des Trägermaterials mit der katalytisch aktiven Komponente (entspricht Stufe B2 des Herstellverfahrens)

Als Trägermaterial wurde ein Polyurethan-Weichschaum verwendet, welcher eine Dichte von 0,02 g/cm³ und eine Porengröße von 0,5 mm besaß. Das Trägermaterial wurde in Form eines zylindrischen Blocks, Durchmesser 2 cm, eingesetzt. Der verwendete Polyurethanschaum wurde mit einem Haftkleber gespült (erhältlich von der Firma Henkel-Sichello unter der Bezeichnung J 6613$^R$). Auf das Trägermaterial, das etwa 1 g wog, wurden 700 mg des in Beispiel 1.1. hergestellten Gold- Eisenoxidgemisches aufgebracht. Anschließend wurde der auf diese Weise erhaltene Trägerkatalysator 16 h bei 80 °C getrocknet.

Beispiel 2:

Anwendung des in Beispiel 1 hergestellten Trägerkatalysators zur Oxydation von Kohlenmonoxid:

Als Behältnis wurde ein Glasrohr mit einem Durchmesser von 2 cm verwendet, welches eine Gaszuführung und eine Gasableitung aufwies. Durch den in das Behältnis eingebrachten Trägerkatalysator wurde dann ein Luftstrom, der eine relative Feuchte von 80 % , eine Temperatur von 22 °C und eine Kohlenmonoxid-Konzentration von etwa 50 ppm besaß, in einer Menge von 28 l/h durchgeleitet. Nach dem Passieren des erfindungsgemäßen Trägerkatalysators betrug die Kohlenmonoxid-Konzentration nur noch 18 ppm.

Beispiel 3:

3.1. Herstellung der katalytisch aktiven Komponente (Stufe A des Herstellungsverfahrens).

Wie in Beispiel 1.1. beschrieben, wurde eine wäßrige, Gold sowie Eisen enthaltende Lösung hergestellt. Diesmal wurden jedoch etwa 10 Liter dieser wäßrigen Lösung eingesetzt und mit etwa 7 Litern einer wäßrigen Lösung von Ammoniumcarbonat, Gehalt: 290 g/l, unter Rühren versetzt. Der ausgefallene Feststoff wurde wie in Beispiel 1.1. aufgearbeitet und calciniert. Der calcinierte Feststoff wurde dann auf eine Teilchengröße von etwa 0,25 bis 1,3 mm zerkleinert. Ausbeute: etwa 540 g.

3.2. Beschichten des Trägermaterials mit der katalytisch aktiven Komponente (entspricht Stufe B2 des Herstellverfahrens).

Als Trägermaterial wurde ein offenporiger Polyurethan-Schaumblock verwendet, welcher eine Dichte von etwa 0,05 g/cm³ und eine Porengröße von etwa 5 bis 10 mm besaß. Das Trägermaterial war 260 mm lang, 188 mm breit und 45 mm hoch.
500 g des im Beispiel 3.1. hergestellten Gold-Eisenoxid-Gemisches wurden in einer Rüttelmaschine in diesen Träger eingebracht und anschließend durch Umhüllung des Trägers mit Kunststoffwebmaterial fixiert. Das Gesamtgewicht des fertigen Trägers betrug 627 g.

Beispiel 4:

Anwendung des in Beispiel 3 hergestellten Trägerkatalysators zur Oxydation von Kohlenmonoxid:

Der Trägerkatalysator wurde in ein mit einer Gaszuführung und einer Gasableitung versehenes Behältnis eingebracht. Durch den in das Behältnis eingebrachten Trägerkatalysator wurde dann ein Luftstrom, der eine relative Feuchte von 60 %, eine Temperatur von 8 °C und eine Kohlenmonoxid-Konzentration von etwa 95 ppm besaß, in einer Menge von 50 m³/h durchgeleitet. Nach dem Passieren des erfindungsgemäßen Trägerkatalysators betrug die Kohlenmonoxid-Konzentration nur noch 3 ppm. Der Gehalt an Kohlenmonoxid im gereinigten Gas betrug demnach nur 3 % des ursprünglichen Gehaltes an Kohlenmonoxid.

**Patentansprüche**

1. Trägerkatalysator zur Oxidation von Kohlenmonoxid bei Temperaturen unterhalb von etwa 100 °C, gekennzeichnet durch ein geschäumtes, im wesentlichen offenporiges organisches Polymer als Träger und eine katalytisch aktive Komponente, welche ein Gemisch von Gold und Eisen(III)oxid, ein Gemisch von Gold und Trikobalttetraoxid, ein Gemisch von Gold und Nickel(II)oxid oder ein Gemisch dieser Gemische enthält.

2. Trägerkatalysator nach Anspruch 1, dadurch gekennzeichnet, daß die katalytisch aktive Komponente als Beschichtung auf dem Polymer vorliegt.

3. Trägerkatalysator nach Anspruch 1 oder 2, dadurch gekennzeichnet, daß das Polymer ein Polyurethan-Polymer ist.

4. Trägerkatalysator nach einem der vorhergehenden Ansprüche, dadurch gekennzeichnet, daß der Gehalt an katalytisch aktiver Komponente zwischen etwa 5 Gew.-% und 80 Gew.-%, vorzugsweise etwa 10 bis 50 Gew.-%, bezogen auf das Gesamtgewicht des Trägerkatalysators, beträgt.

5. Trägerkatalysator nach einem der vorhergehenden Ansprüche, dadurch gekennzeichnet, daß die katalytisch aktive Komponente ein Gemisch von Gold und Eisen(III)oxid enthält.

6. Trägerkatalysator nach Anspruch 5, dadurch gekennzeichent, daß in der katalytisch aktiven Komponente das Atomverhältnis von Gold zu Eisen zwischen etwa 1 : 99 und 1 : 9, vorzugsweise zwischen etwa 1 : 49 und 1 : 14 liegt.

7. Trägerkatalysator nach Anspruch 1, dadurch gekennzeichnet, daß die katalytische aktive Komponente aus einem Gemisch von Gold und Eisen(III)oxid besteht.

8. Verfahren zur Herstellung von Trägerkatalysatoren zur Oxidation von Kohlenmonoxid, dadurch gekennzeichnet, daß man

A) eine katalytisch aktive Komponente herstellt, umfassend das Erzeugen eines Gemisches einer Goldverbindung und einer Eisen(III) Verbindung, eines Gemisches einer Goldverbindung und einer Kobalt-Verbindung, eines Gemisches einer Goldverbindung und einer Nickel-Verbindung oder eines Gemisches dieser Gemische, Calcinieren des Gemisches bei Temperaturen oberhalb von 200 °C und Zerkleinern des erhaltenen Feststoffes auf Partikelgrößen unterhalb von etwa 2 mm,
und
B1) zur Herstellung von Trägerkatalysatoren mit homogen im Träger verteilter katalytisch aktiver Komponente ein organisches Präpolymer mit der in Stufe A) erhaltenen katalytisch aktiven Komponente vermischt, das erhaltene Gemisch unter Verschäumen polymerisiert und gewünschtenfalls vorhandene geschlossene Zellen retikuliert
oder
B2) zur Herstellung beschichteter Trägerkatalysatoren ein geschäumtes, im wesentlichen offenporiges organisches Polymer verwendet und das Polymer mit der in Stufe A) erhaltenen katalytisch aktiven Komponente beschichtet.

9. Verfahren nach Anspruch 8, dadurch gekennzeichnet, daß man bei der Herstellung die Stufen A) und B2) kombiniert.

10. Verfahren nach Anspruch 9, dadurch gekennzeichnet, daß man ein geschäumtes, im wesentlichen offenporiges organisches Polymer verwendet, das Polymer und/oder die katalytisch aktive Komponente einer Vorbehandlung unterwirft, die die Haftung der katalytisch aktiven Komponente auf der Oberfläche des Polymers verbessert, und das Polymer mit der katalytisch aktiven Komponente beschichtet.

11. Verfahren nach Anspruch 10, dadurch gekennzeichnet, daß die Vorbehandlung des Polymers die Behandlung mit einem die Anlösung der Oberfläche bewirkenden Lösungsmittel, mit einem Klebemittel, mit einem die Oberfläche des Polymers ätzenden Gas und/oder eine thermische Behandlung des Polymers umfaßt.

12. Verfahren zur Oxidation von Kohlenmonoxid, dadurch gekennzeichnet, daß man ein Kohlenmonoxid und Sauerstoff enthaltendes Gas über einen Trägerkatalysator nach den Ansprüchen 1 bis 7 leitet.

13. Verfahren nach Anspruch 12, dadurch gekennzeichnet, daß man bei Temperaturen unterhalb von etwa 50 °C arbeitet.

14. Verfahren nach Anspruch 12 oder 13, dadurch gekennzeichnet, daß man als Gas Kohlenmonoxid enthaltende Luft einsetzt.

15. Anwendung der Trägerkatalysatoren gemäß den Ansprüchen 1 bis 7 zur Verringerung des Kohlenmonoxidgehaltes der Luft, die Fahrzeuginnenräumen, insbesondere von Autos, Nutzfahrzeugen und Autobussen zugeführt wird.

## Claims

1. Supported catalyst for the oxidation of carbon monoxide at temperatures below about 100°C, characterised by a foamed, substantially open-pored organic polymer as the support and a catalytically active component which contains a mixture of gold and iron (III) oxide, a mixture of gold and tricobalt tetroxide, a mixture of gold and nickel (II) oxide or mixtures of these mixtures.

2. Supported catalyst according to Claim 1, characterised in that the catalytically active component is present as a coating on the polymer.

3. Supported catalyst according to Claim 1 or 2, characterised in that the polymer is a polyurethane polymer.

4. Supported catalyst according to one of the preceding Claims, characterised in that the content of catalytically active component is between about 5% by weight and 80% by weight, preferably about 10 to 50% by weight, relative to the total weight of the supported catalyst.

5. Supported catalyst according to one of the preceding Claims, characterised in that the catalytically active component contains a mixture of gold and iron (III) oxide.

6. Supported catalyst according to Claim 5, characterised in that in the catalytically active component the atomic ratio of gold to iron is between about 1 : 99 and 1 : 9, preferably between about 1 : 49 and 1 : 14.

7. Supported catalyst according to Claim 1, characterised in that the catalytically active component consists of a mixture of gold and iron (III) oxide.

8. Process for the production of supported catalysts for the oxidation of carbon monoxide, characterised in that

A) a catalytically active component is produced, comprising the production of a mixture of a gold compound and an iron (III) compound, of a mixture of a gold compound and a cobalt compound, of a mixture of a gold compound and a nickel compound or of a mixture of these mixtures, calcination of the mixture at temperatures above 200°C and grinding of the resulting solids to particle sizes below about 2 mm,

and

B1) for the production of supported catalysts with catalytically active component homogenously distributed in the support, an organic prepolymer is mixed with the catalytically active component obtained in stage A), the resulting mixture is polymerised with foaming, and if desired any closed cells which are present are reticulated

or

B2) for the production of coated supported catalysts a foamed, substantially open-pored organic polymer is used, and the polymer is coated with the catalytically active component obtained in stage A).

9. Process according to Claim 8, characterised in that during production stages A) and B2) are combined.

10. Process according to Claim 9, characterised in that a foamed, substantially open-pored organic polymer is used, the polymer and/or the catalytically active component is subjected to pre-treatment which improves the adhesion of the catalytically active component to the surface of the polymer, and the polymer is coated with the catalytically active component.

11. Process according to Claim 10, characterised in that the pre-treatment of the polymer comprises treatment with a solvent causing solubilisation of the surface, with an adhesive, with a gas corroding the surface of the polymer and/or heat treatment of the polymer.

12. Process for the oxidation of carbon monoxide, characterised in that a gas containing carbon monoxide and oxygen is passed through a supported catalyst according to Claims 1 to 7.

13. Process according to Claim 12, characterised in that it operates at temperature below about 50°C.

14. Process according to Claim 12 or 13, characterised in that air containing carbon monoxide is used as the gas.

15. Use of the supported catalysts according to Claims 1 to 7 for reducing the carbon monoxide content of the air which is supplied to vehicle interiors, in particular of cars, commercial vehicles and buses.

## Revendications

1. Catalyseur supporté pour l'oxydation de l'oxyde de carbone à des températures inférieures à environ 100°C, caractérisé par un polymère organique alvéolaire essentiellement à pores ouverts en tant que support et un composant catalytiquement actif contenant un mélange d'or et d'oxyde de fer(III), un mélange d'or et de tétraoxyde de tricobalt, un mélange d'or et d'oxyde de nickel(II) ou un mélange de ces mélanges.

2. Catalyseur supporté selon la revendication 1, caractérisé en ce que le composant catalytiquement actif est présent sur le polymère sous forme de revêtement.

3. Catalyseur supporté selon la revendication 1 ou 2, caractérisé en ce que le polymère est un polymère de polyuréthanne.

4. Catalyseur supporté selon l'une des revendications précédentes, caractérisé en ce que la teneur en composant catalytiquement actif se situe entre environ 5% en poids et 80% en poids, de préférence entre environ 10 et 50% en poids par rapport au poids total du catalyseur supporté.

5. Catalyseur supporté selon l'une des revendications précédentes, caractérisé en ce que le composant catalytiquement actif contient un mélange d'or et d'oxyde de fer(III).

6. Catalyseur supporté selon la revendication 5, caractérisé en ce que, dans le composant catalytiquement actif, le rapport atomique de l'or au fer se situe entre environ 1:99 et 1:9, de préférence entre environ 1:49 et 1:14.

7. Catalyseur supporté selon la revendication 1, caractérisé en ce que le composant catalytiquement actif consiste en un mélange d'or et d'oxyde de fer(III).

8. Procédé de préparation de catalyseurs supportés pour l'oxydation de l' oxyde de carbone, caractérisé en ce que

A) l'on prépare un composant catalytiquement actif, comprenant la formation d'un mélange d'un composé de l'or et d'un composé de fer(III), d'un mélange d'un composé de l'or et d'un composé de cobalt, d'un mélange d'un composé de l'or et d'un composé de nickel ou d'un mélange de ces mélanges, la calcination du mélange à des températures supérieures à 200°C et le broyage de la matière solide résultante jusqu'à des grosseurs de particule inférieures à environ 2 mm
et que,

B1) pour la préparation de catalyseurs supportés avec un composant catalytiquement actif réparti de façon homogène sur le support, on mélange un prépolymère organique avec le composant catalytiquement actif obtenu dans l'étape A), on polymérise le mélange obtenu avec moussage et on réticule, s'il y a lieu, les cellules fermées présentes
ou que,

B2) pour la préparation de catalyseurs supportés enrobés, on utilise un polymère organique alvéolaire essentiellement à pores ouverts et enrobe le polymère avec le composant catalytiquement actif obtenu dans l'étape A).

9. Procédé selon la revendication 8, caractérisé en ce que, pour la préparation, on combine les étapes A) et B2).

10. Procédé selon la revendication 9, caractérisé en ce qu'on utilise un polymère organique alvéolaire essentiellement à pores ouverts, qu'on soumet le polymère et/ou le composant catalytiquement actif à un prétraitement qui améliore l'adhérence du composant catalytiquement actif à la surface du polymère et qu'on enrobe le polymère avec le composant catalytiquement actif.

11. Procédé selon la revendication 10, caractérisé en ce que le prétraitement du polymère comprend le traitement par un solvant entraînant la détrempe de la surface, par une substance adhésive, par un gaz attaquant la surface du polymère et/ou un traitement thermique du polymère.

12. Procédé pour l'oxydation de l' oxyde de carbone, caractérisé en ce qu'on fait passer un gaz contenant de l'oxyde de carbone et de l'oxygène sur un catalyseur supporté selon les revendications 1 à 7.

13. Procédé selon la revendication 12, caractérisé en ce qu'on opère à des températures inférieures à environ 50°C.

14. Procédé selon la revendication 12 ou 13, caractérisé en ce qu'on met en oeuvre en tant que gaz de l'air contenant de l'oxyde de carbone.

15. Utilisation des catalyseurs supportés selon les revendications 1 à 7 pour la réduction de la teneur en oxyde de carbone de l'air qui est envoyé dans les espaces intérieurs des véhicules, notamment des voitures automobiles, des véhicules utilitaires et des autobus.